# FASCICULE DE BREVET EUROPEEN

(11) **EP 0 930 791 B1**
(45) Date de publication et mention de la délivrance du brevet: **26.02.2003**
(21) Numéro de dépôt: 98403328.2
(22) Date de dépôt: 30.12.1998
(51) Int. Cl.: H04Q 3/32, H04L 12/66, H04Q 11/04

(54) **Carte d'abonné, unité de raccordement d'abonnés, et centre de commutation permettant de concentrer des trames internet**
Teilnehmerleitungskarte, Teilnehmerverbindungseinheit, und Vermittlungsanlage mit Konzentration von Internetrahmen
Subscriber line card, subscriber connection unit, and switching exchange allowing internet frame concentration

(30) Priorité: 31.12.1997 FR 9716812
(43) Date de publication de la demande: 21.07.1999
(60) Demande divisionnaire: 01115285.7
(73) Titulaire: ALCATEL, 75008 Paris (FR)
(72) Inventeur: Lassaux, Jean, 22300 Lannion (FR); Levy, Michel, 91400 Gometz la Ville (FR)
(74) Mandataire: Sciaux, Edmond

(56) Documents cités:
- EP-A- 0 377 203
- EP-A- 0 635 987
- EP-A- 0 661 900
- WO-A-98/17079
- US-A- 5 521 914

## Description

L'invention concerne une carte d'abonné, une unité de raccordement d'abonnés, et un centre de commutation permettant de concentrer des trames dites Internet, c'est à dire des trames formées selon le protocole dit de transmission point à point, et selon le protocole Internet.

De nombreux utilisateurs d'Internet utilisent le réseau téléphonique public pour accéder à leur fournisseur d'accès. Les communications acheminant des données entre un fournisseur d'accès à Internet et un terminal d'abonné, via un réseau téléphonique classique, durent plus longtemps que les communications téléphoniques classiques. Par contre, la transmission de ces données est effectuée en salves séparées par de longues périodes d'inactivité.

On rappelle que dans un réseau téléphonique analogique, un terminal d'abonné émet et reçoit des trames Internet au moyen d'un modem situé à proximité de ce terminal, et d'un autre modem situé à proximité d'un serveur constituant un point d'accès à un réseau de transmission de données.

Un type particulier de modem, appelé ATM / ADSL (Asynchronous Transfer Mode/Asymetrical Digital subscriber Loop) permet de transmettre sur une ligne analogique, dans une bande de fréquences supérieure à la bande téléphonique, des trames Internet ayant un débit élevé dans le sens allant du terminal d'abonné vers le réseau.

On rappelle que dans un réseau numérique à intégration de services (RNIS), l'accès de base d'un abonné est constitué :
- de deux canaux B ayant un débit de 64 Kb/s ;
- et d'un canal D ayant un débit de 16 Kb/s, qui est prévu pour transmettre des données.

Chaque terminal d'abonné RNIS est reliée à un centre de commutation locale, via une unité de raccordement, qui peut être déportée à une certaine distance du centre de commutation. Dans l'unité de raccordement d'abonnés, un certain nombre de cartes d'abonné constituent l'interface avec les lignes d'abonné. Lorsqu'un abonné utilise le canal D pour transmettre classiquement des données, il est connu de concentrer ces données, au niveau de la carte d'abonné, au moyen d'un circuit appelé contrôleur HDLC qui met en oeuvre le protocole classique HDLC, puis de commuter les trames de données concentrées pour les acheminer vers une passerelle d'accès à un commutateur de trames de données.

Lorsqu'un abonné utilise un canal D pour transmettre des trames Internet, il est connu de séparer ces trames de celles dédiées à la signalisation puis de router ces trames telles qu'elles sont, dans le commutateur local, pour les acheminer jusqu'à un noeud d'accès à un réseau de transmission de données.

Lorsqu'un abonné utilise un canal B, ou les deux canaux B, pour transmettre des trames Internet, il est connu de router ces trames telles qu'elles sont, dans le commutateur local, pour les acheminer jusqu'à un noeud d'accès à un réseau de transmission de données. Ce noeud d'accès est éloigné. Il est situé au-delà du commutateur local, ou même au-delà d'un ou plusieurs noeuds de transit.

Dans le cas d'un réseau RNIS, une communication vers un fournisseur d'accès Internet occupe au moins un canal B ayant un débit de 64 Kb/s alors que la transmission de données du fournisseur d'accès Internet vers le terminal d'abonné a un débit moyen de l'ordre de 5 Kb/s.

Un tel dispositif et centre de communication sont par exemple divulgués dans le document EP 0 661 900 A.

Quel que soit le type de transmission utilisé entre le terminal d'abonné et le fournisseur d'accès au service Internet, les ressources du réseau téléphonique sont alors sous-employées. D'autre part, le trafic Internet est en croissance rapide. Les réseaux téléphoniques risquent donc d'être congestionnés par le trafic Internet.

Le but de l'invention est de proposer une solution qui soit simple et peu coûteuse à mettre en oeuvre dans les centres de commutation futurs ou déjà existants.

Un premier objet de l'invention est une carte d'abonné numérique, pour un réseau de télécommunication comportant des commutateurs numériques à intégration de services et des commutateurs de données, comportant
- des premiers moyens pour concentrer, sur des liaisons de données à nx64 Kb/s, des trames Internet provenant d'une pluralité de lignes d'abonné numériques avant de les router vers un commutateur de données ;
- et des seconds moyens pour recevoir un ordre fourni par un circuit de traitement d'appel, et pour commander les premiers moyens de façon à concentrer des trames Internet et les transmettre dans un circuit virtuel les acheminant vers un centre de commutation de données, lorsque ces seconds moyens reçoivent un tel ordre ;
**caractérisée** en ce qu'elle comporte en outre un circuit d'interface de bus de fond de panier, de type à détection de porteuse et résolution de collision, couplé aux premiers moyens, et couplée à un bus reliant une pluralité de cartes d'abonné.

La carte d'abonné ainsi caractérisée réalise une première concentration des trames Internet provenant d'un terminal d'abonné numérique, au plus près du terminal d'abonné numérique. Elle permet donc d'utiliser plus efficacement les ressources de l'unité de raccordement dans laquelle est située cette carte, et toutes les ressources situées en aval. Cette solution est particulièrement avantageuse lorsqu'elle est appliquée à des cartes de raccordement d'abonné numériques qui existent déjà et qui comportent des moyens de concentration de trames pour les canaux D, puisqu'il suffit de modifier les moyens de commandes de ces moyens de concentration. Cette modification consiste souvent, en pratique, à modifier du logiciel mémorisé dans une mémoire reprogrammable électriquement.

Un deuxième objet de l'invention est une unité de raccordement d'abonné, pour un réseau de télécommunication comportant des commutateurs numériques à intégration de services et des commutateurs de données, caractérisée en ce qu'elle comporte au moins une carte d'abonné numérique selon l'invention.

L'unité de raccordement ainsi caractérisée est peu coûteuse à obtenir puisqu'il suffit de changer les cartes d'abonné. Elle réalise une première concentration des trames Internet provenant de lignes d'abonné numériques. Si elle comporte en outre d'autres moyens de concentration, elle permet une deuxième concentration des trames Internet provenant d'une pluralité de lignes d'abonné numériques.

Un troisième objet de l'invention est une unité de raccordement d'abonnés, caractérisée en ce qu'elle comporte des moyens de concentration pour concentrer des trames Internet provenant d'une pluralité de lignes d'abonné analogiques.

L'unité de raccordement ainsi caractérisée permet de réaliser une première concentration des trames Internet provenant de lignes d'abonné analogiques.

Un quatrième objet de l'invention est un centre de commutation destiné à être relié à au moins une unité de raccordement selon l'invention, et comportant des moyens de traitement d'appel ; caractérisé en ce que ses moyens de traitement d'appel comportent des moyens pour commander des moyens de compression de trames Internet, situés sur des cartes d'abonné numériques selon l'invention.

Le centre de commutation ainsi caractérisé est peu coûteux à réaliser puisqu'il suffit de modifier le logiciel de traitement d'appel d'un centre de commutation RNIS classique.

Les centres de commutation et les unités de raccordement ainsi caractérisés permettent d'extraire le trafic Internet du réseau téléphonique le plus près possible de la carte d'abonné, pour épargner des ressources de ce réseau téléphonique. L'invention sera mieux comprise et d'autres caractéristiques apparaîtront à l'aide de la description ci-dessous et des figures l'accompagnant :
L'invention sera mieux comprise et d'autres caractéristiques apparaîtront à l'aide de la description ci-dessous et des figures l'accompagnant :
   - La figure 1 représente le schémas synoptique d'un premier exemple de centre de commutation et d'unité de raccordement d'abonnés, selon l'invention .
   - La figure 2 représente le schémas synoptique d'un exemple de réalisation de la carte d'abonné selon l'invention.
   - La figure 3 représente le schémas synoptique d'un deuxième exemple de centre de commutation et d'unité de raccordement d'abonnés, selon l'invention .

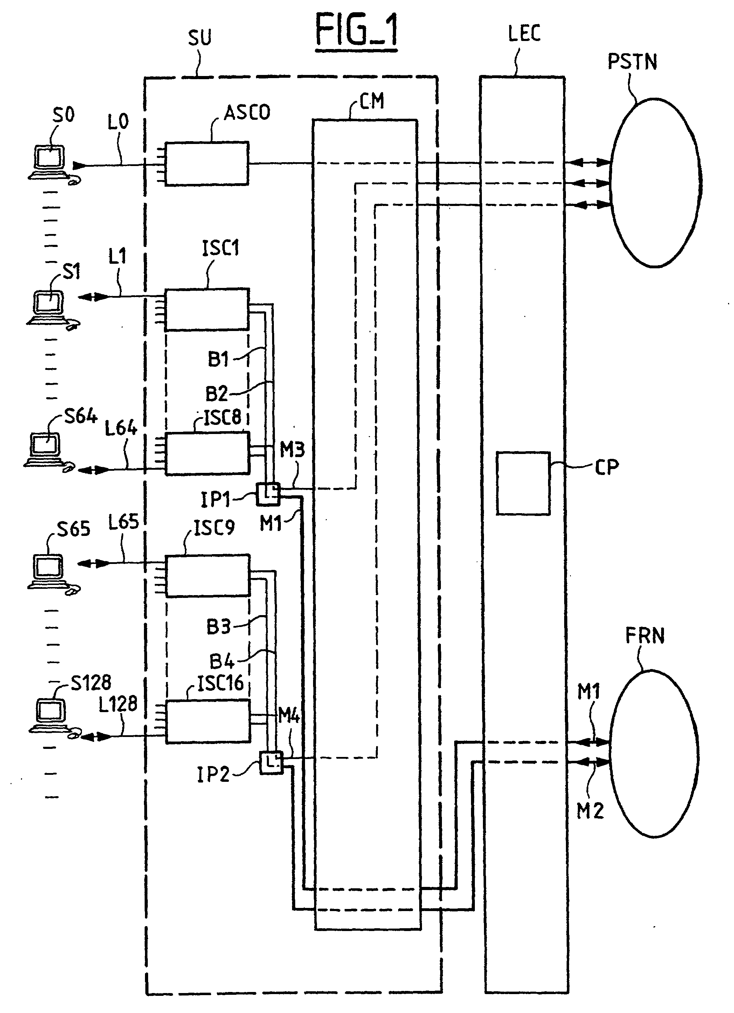

Le premier exemple de réalisation de centre de commutation et d'unité de raccordement d'abonnés, qui est représenté sur la **figure 1**, comporte :
- une unité de raccordement d'abonnés, SU, ayant des entrées-sorties reliées à des terminaux d'abonné S0, ..., S128, respectivement par des lignes d'abonné L0, .... L128 ;
- un centre de commutation local LEC qui peut être à une certaine distance de l'unité de raccordement d'abonnés SU, et qui est reliée à celle-ci par des liaisons à multiplexage temporel ; ce centre LEC comportant une unité de traitement d'appel CP, essentiellement constituée d'un processeur exécutant un logiciel ; et ce centre LEC étant relié par ailleurs à un réseau téléphonique classique PSTN, et à un réseau FRN de transmission de données à relayage de trames.
L'unité de raccordement d'abonnés SU comporte :
- une pluralité de cartes d'abonné, parmi lesquelles il y a des cartes analogiques, telles que la carte ASC0, et des cartes numériques telles que les cartes ISC1, ..., ISC16 ; chaque carte d'abonné étant reliée à huit terminaux d'abonné de même nature ;
- deux circuits d'interface de bus, IP1 et IP2 ;
- une matrice de connexion, CM.

Par exemple, le terminal d'abonné analogique S0 est relié à la carte d'abonné ASC0 par une ligne L0. La carte ASC0 code sous forme numérique les signaux analogiques provenant du terminal S0, que soit un signal vocal ou un signal numérique mis sous forme analogique par un modem. Dans le sens de transmission inverse, elle décode et remet sous forme analogique un signal numérique provenant du réseau PSTN ou du réseau FRN. Une entrée-sortie de la carte ASC0 est reliée à une entrée-sortie de la matrice CM. cette dernière concentre le trafic provenant des terminaux d'abonné et le transmet au centre de commutation local LEC.

Les cartes d'abonné numériques ISC1, ..., ISC16 sont identiques entre elles, et groupées par groupe de huit. Les cartes ISC1, ..., ISC8 sont reliées à un bus B1 et à un bus B2 qui aboutissent au circuit IP1 d'interface de bus. Le circuit IP1 fait l'interface entre le bus B1 et une liaison point à pont M1 d'une part, et entre le bus B2 et une liaison point à point M3, d'autre part. Dans l'exemple de réalisation représenté sur la figure 1, chacun des deux bus B1 et B2 est utilisé pour la transmission de trames de données et d'échantillons de signaux vocaux ; le circuit IP1 est relié au réseau de transmission de données FRN via la matrice de connexion CM et le centre de commutation local LEC.

La liaison M1 relie le circuit IP1 à la matrice de commutation CM. C'est une liaison à multiplexage temporel synchrone et à haut débit (N x 64Kb/s) dédiée aux trames de données. La liaison M3 relie le circuit IP1 à la matrice de connexion CM. C'est une liaison point à point, ayant un débit de 2 Mb/s, dédiées aux échantillons vocaux.

Le fait de faire passer la liaison M1 via la matrice de connexion CM et le centre de commutation local LEC présente deux avantages :
- on peut utiliser 30 - N circuits sur le bus B1 pour la transmission d'échantillons vocaux ;
- on peut multipfexer des liaisons de données à n x 64 Kb/s sur la liaison M1 à 2 Mb/s allant vers le réseau de transmission de données FRN.

Selon des variantes de réalisation, le circuit IP1 est relié directement au réseau de transmission de données FRN, ou seulement via le centre de commutation locale LEC, ou via seulement la matrice de connexion CM. Dans le cas où le circuit IP1 est relié directement au réseau de transmission de données FRN, les bus B1 et B2 sont dédiés respectivement à la transmission de données et à la transmission d'échantillons vocaux.

Les cartes ISC8 ..., ISC16 sont reliées à un bus B3 et à un bus B4, qui sont des bus passifs synchrones, analogues aux bus B1 et B2, et qui aboutissent au circuit IP2 d'interface de bus. Le circuit IP2 est relié à la matrice de connexion CM par des liaisons M2 et M4 analogues aux liaisons M1 et M3 respectivement.

Par exemple, le terminal d'abonné numérique S1 est relié à la carte d'abonné ISC1 par une ligne L1.

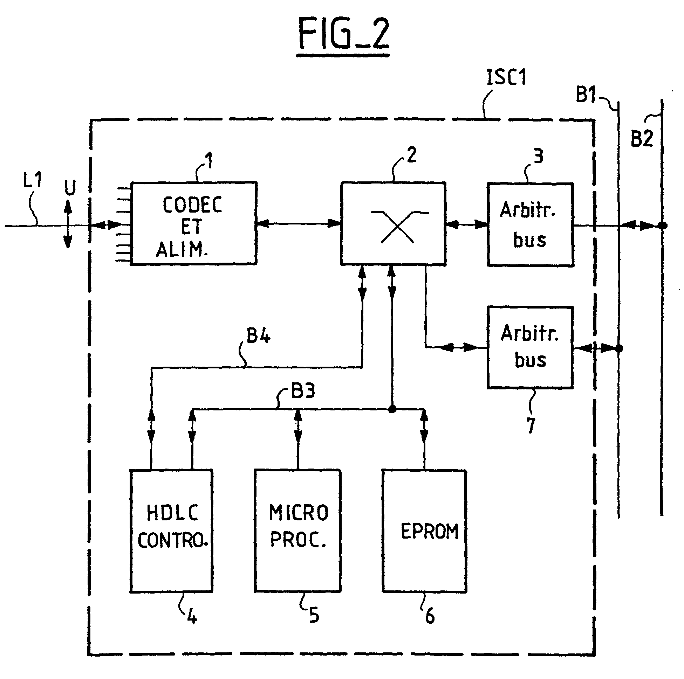

La **figure 2** représente à titre d'exemple le schémas synoptique de la carte d'abonné ISC1. Elle comporte
- un circuit 1 de codage-décodage de ligne, pour des signaux transmis dans des canaux B de lignes d'abonné (codage 2B1Q par exemple), et de télé-alimentation pour huit terminaux numériques d'abonné ; ce circuit 1 ayant des premières entrées-sorties raccordées respectivement à huit lignes d'abonné, seule la ligne L1 étant représentée ;
- un circuit d'arbitrage de bus 3, relié à un bus B2 externe à la carte, et qui est de type à détection de collision et résolution de conflit (CSMA-CR) ;
- un circuit d'arbitrage de bus 7, relié à un bus B1 externe à la carte, et qui est de type CSMA-CR ;
- un circuit 4 appelé contrôleur HDLC, mettant en oeuvre le protocole classique appelé HDLC (High Level Data Link Control) sur au moins 32 canaux ;
- un microprocesseur 5 ;
- une mémoire 6 de type EPROM mémorisant le logiciel exécuté par le processeur 5 ;
- une matrice de commutation 2 ayant des entrées-sorties reliées respectivement à la seconde entrée-sortie du circuit 1 de codage-décodage et de télé-alimentation, et à des entrées-sorties des circuits d'arbitrage 3 et 7 ;
- un bus B3 interne à la carte, et reliant des entrées-sorties de la matrice 2, du contrôleur HDLC 4, du microprocesseur 5, et de la mémoire 6 ;
- et un bus B4 interne à la carte, et reliant une entrée-sortie de la matrice 2 à une entrée-sortie du contrôleur HDLC 4 ; ce bus B4 transmettant des données vers et en provenance des 32 canaux HDLC par un multiplexage temporel comportant 32 intervalles temporels dans chaque sens.

Le circuit contrôleur HDLC 4 est un circuit intégré monolithique disponible dans le commerce. Sur une carte d'abonné reliée à huit lignes d'abonné, deux canaux HDLC sont utilisés pour des fonctions de signalisation internes au centre de commutation LEC et à l'unité de raccordement d'abonnés SU ; huit canaux HDLC sont affectés respectivement aux huit canaux D utilisés par les huit lignes d'abonné reliées à la carte ; et vingt deux sont disponibles dans le cas d'une utilisation classique des cartes d'abonné.

Selon l'invention, ces canaux HDLC libres sont utilisés pour la concentration des trames Internet. Il n'y a pas besoin de rajouter du matériel sur la carte, pour cette application. Le processeur 5 exécute un logiciel qui lui permet de recevoir des ordres provenant du circuit de traitement d'appel CP via des liaisons de signalisation classiques et non représentées. Le logiciel exécuté par le processeur 5, est adapté de telle façon qu'il puisse commander le circuit contrôleur HDLC 4 pour comprimer des trames Internet, lorsque le circuit de traitement d'appel CP en donne l'ordre. La portée de l'invention n'est pas limitée au cas où le circuit de traitement d'appel est situé dans le centre de commutation local. Le fonctionnement serait analogue s'il était au niveau de l'unité de raccordement.

Quand un terminal d'abonné, S1 par exemple, demande l'établissement d'une communication avec un fournisseur d'accès Internet, cette demande est détectée par le circuit de traitement d'appel, CP, du commutateur local LEC, au moyen de deux critères :
- Le numéro appelé correspond à un fournisseur d'accès Internet.
- Le champ "élément d'information d'aptitude du porteur" (Bearer Capability Information Element) du message SETUP en provenance du terminal d'abonné indique une communication de données utilisant la pile de protocole Internet.

Le circuit de traitement d'appel, CP, du centre de commutation local LEC demande alors au processeur 5 de la carte d'abonné ISC1 de commander la matrice de commutation 2 pour relier le canal B qui sera utilisé pour cet appel, à l'un des 22 canaux HDLC disponibles du contrôleur HDLC 4. D'autre part, il lui fournit un identificateur de connexion de liaison de données, pour l'appel en cours d'établissement.

Quand une trame Internet arrive de la ligne d'abonné L1, le circuit contrôleur HDLC 4 prépare une trame de données Internet selon un protocole de relayage de trames, le protocole LAPF par exemple (Le protocole LAPD pourrait être utilisé de même). D'autre part, un canal D est connecté en permanence à l'un des canaux HDLC du circuit contrôleur HDLC 4 pour transporter, de manière classique, la signalisation liée aux appels.

Le circuit de traitement d'appel CP affecte un circuit virtuel à chaque appel vers un fournisseur d'accès Internet. Chaque trame Internet est donc transmise dans un circuit virtuel correspondant à un fournisseur d'accès Internet.

Lorsque le circuit contrôleur 4 a fini de préparer une trame LAPF, à partir des trames Internet fournies par une ligne d'abonné, le processeur 5 inscrit cette trame dans une file d'attente, une file d'attente étant prévue respectivement pour chaque canal B. Le circuit contrôleur 4 lit ces trames LAPF selon une priorité tournante, et les inscrit dans une file de sortie vers un canal de données préétabli (en mode semi-permanent) constitué par la concaténation de N circuits à 64 Kb/s portés par le bus B1, pour les transmettre par la liaison M1 à haut débit. Le mécanisme de priorité tournante donne des chances égales à toutes les cartes d'abonné pour accéder au bus B1.

Les trames Internet ainsi concentrées sont appliquées à la liaison multiplexée M1, via le circuit d'interface IP1. La liaison M1 les transmet à un commutateur d'accès du réseau de transmission de données FRN. Les lignes M1 et M2 sont des lignes de transmission multiplexée semi-permanentes, ayant chacune un débit élevé, choisi après une étude statistique du trafic. La liaison M1, par exemple, est commune pour la transmission de trames Internet provenant des différentes lignes d'abonné L1, ... , L64. Les trames Internet sont multiplexées statistiquement. Le trafic des trames Internet est ainsi concentré au niveau de chaque carte d'abonné. Il n'y a pas de circuit physique alloué en permanence, dans l'unité de raccordement SU et le centre LEC, pour chaque terminal d'usager connecté à un fournisseur d'accès Internet. On évite ainsi une sous-utilisation de leurs ressources.

Pour le sens de transmission du terminal d'abonné vers le réseau de transmission de données FRN, le circuit contrôleur 4 réalise une encapsulation des trames des canaux B. L'encapsulation peut être de deux types, selon l'interface de liaison de données qui est utilisée en accès au réseau de transmission de données, et en accès au serveur d'accès réseau du fournisseur d'accès Internet :
- Encapsulation directe, dans des trames convenables pour le relayage de trame : Le circuit contrôleur 4 reçoit des trames selon le protocole Point à Point (PPP), et il encapsule ces trames dans des trames selon le protocole LAPF, conformément à la recommandation ITU-TQ.922 et au document IETF rfc1973. Ainsi un circuit virtuel temporaire est établi pour chaque appel à un fournisseur Internet. La procédure de signalisation du relayage de trame, pour ces circuits virtuels commutés, est exécutée conformément à la recommandation ITU-TQ.933.
- Encapsulation dans un tunnel à relayage de trame, par multiplexage des sessions du protocole PPP: Chaque appel à un fournisseur Internet entraîne la création d'une session selon le protocole PPP, entre le terminal d'abonné et son fournisseur d'accès, quand une connexion physique ou logique est établie entre eux. L'encapsulation consiste ensuite à multiplexer, dans un même circuit virtuel, des paquets, selon le protocole point à point, qui sont relatifs à différentes communications avec un même fournisseur d'accès Internet. Ainsi un circuit virtuel semi-permanent est créé sur la liaison de données à N x 64 Kb/s qui aboutit à un fournisseur d'accès Internet. Dans ce circuit virtuel semi-permanent un tunnel est ainsi créé pour supporter le multiplexage de différentes communications, selon le protocole PPP, relatives à un même fournisseur Internet. Un identificateur d'appel est attribué à chaque appel à un fournisseur Internet, et cet identificateur est placé dans l'en-tête de la trame d'encapsulation, en vue de permettre l'identification des paquets transmis selon le protocole PPP. Le protocole appelé "tunnel couche 2" (Layer 2 Tunnelling Protocol, ou L2TP), qui est en train de devenir une norme de fait à l'IETF, est un exemple de protocole de communication utilisable entre les fournisseur d'accès Internet et le circuit contrôleur HDLC qui concentre les trames Internet.

Pour le sens de transmission du terminal d'abonné vers le réseau de transmission de données FRN, le circuit contrôleur 4 transmet les trames LAPF sans les modifier.

Les trames, selon le protocole PPP, fournies par un canal B ou D sont attribuées à une connexion virtuelle à relayage de trame, établie sur une liaison de données à haut débit, telle que M1 ou M2, pour être transmises au réseau FRN consacré à la transmission de données. L'interface de liaison de données utilisée dans le réseau de transmission de données FRN est une interface du type réseau-usager, pour le relayage de trame, conforme à la recommandation ITU-T X36, ou conforme à l'accord d'implémentation FRF.4 du Forum Relayage de Trame.

Pour le sens de transmission du centre de commutation LEC vers les canaux B d'un terminal d'abonné, le contrôleur 4 réalise une désencapsulation. Les trames, conformes au protocole LAPF, qui sont reçues par une carte d'abonné, tel que la carte ISC1 par exemple, sont reconnues par la carte destinataire au moyens d'un dispositif d'identification prévu classiquement dans le contrôleur HDLC 4. Ce dispositif d'identification lit un champ d'adresse contenu dans l'en-tête de chaque trame LAPF.

Pour le sens de transmission du centre de commutation LEC vers les canaux D d'un terminal d'abonné, le contrôleur HDLC 4 transmet les trames LAPF en les distribuant sur les canaux D des terminaux d'abonné selon l'identificateur de connexion de liaison de données numériques (DLCl : Data Link Connection Identifier) qui est placé en tête de trame. Chaque trame est transmise par une connexion virtuelle semi-permanente.

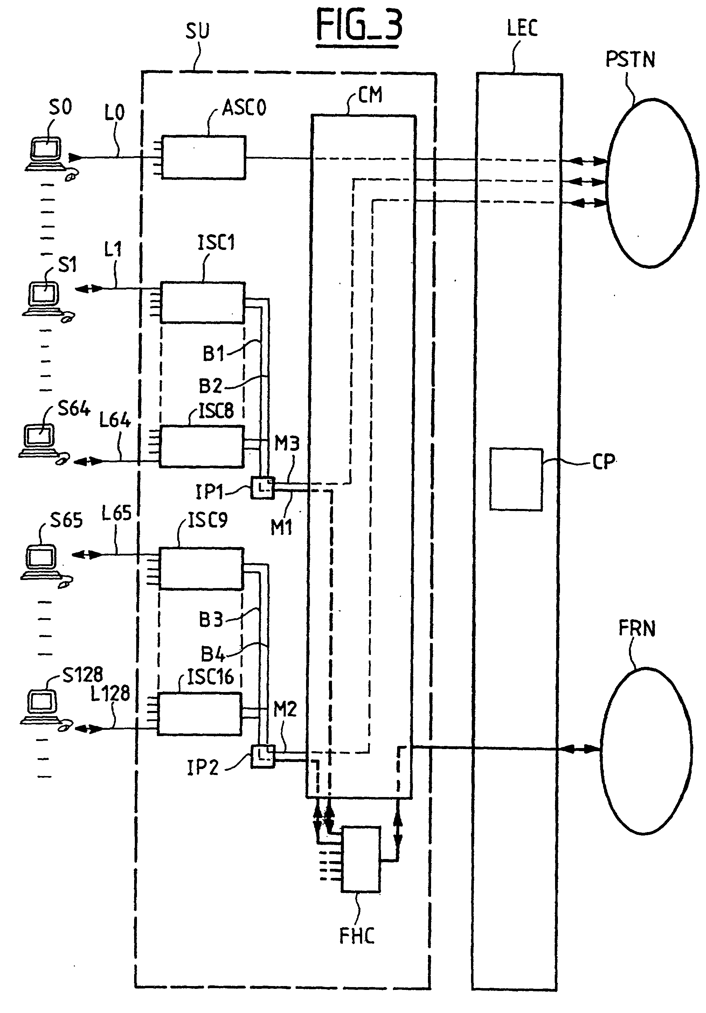

La **figure 3** représente le schémas synoptique d'un second exemple de centre de commutation et d'unité de raccordement d'abonnés, selon l'invention. Les moyens qui sont semblables à ceux du premier exemple portent respectivement les mêmes références. Ce second exemple diffère du premier par le fait que les liaisons de données à N x 64 Kb/s portées par les conduits à haut débit M1 et M2 ne sont pas terminées par le réseau de transmission de données FRN, mais par un circuit de concentration FHC qui constitue un étage de concentration supplémentaire des trames Internet, situé au niveau de l'unité de raccordement d'abonnés SU. Les liaisons à haut débit portées par les conduits M1 et M2, ainsi que d'autres liaisons analogues provenant d'autres groupes de cartes d'abonné non représentés, sont connectées respectivement à des entrées-sorties du circuit FHC, par la matrice de commutation CM. Une entrée-sortie du circuit FHC est connecté, par la matrice CM, à une entrée-sortie du centre de commutation local LEC, lequel connecte cette sortie au réseau de transmission de données FRN.

Dans les deux exemples précédents, les communications entre des terminaux d'abonné analogiques (munis de modem) et des points de présence des fournisseurs d'accès au service Internet sont traitées de manière classique, c'est à dire comme des circuits vocaux.

## Revendications

1. Carte d'abonné numérique (ISC1, ..., ISC16), pour un réseau de télécommunication comportant des commutateurs (LEC) numériques à intégration de services et des commutateurs de données (FRN), comportant :
- des premiers moyens (4) pour concentrer, sur des liaisons de données à nx64 Kb/s, des trames Internet provenant d'une pluralité de lignes d'abonné numériques (L1,..., L128) avant de les router vers un commutateur de données (FRN) ;
- et des seconds moyens (2, 5, 6) pour recevoir un ordre fourni par un circuit (CP) de traitement d'appel, et pour commander les premiers moyens (4) de façon à concentrer des trames Internet et les transmettre dans un circuit virtuel les acheminant vers un centre de commutation de données (FRN), lorsque ces seconds moyens reçoivent un tel ordre ;
**caractérisée en ce qu'**elle comporte en outre un circuit (3) d'interface de bus de fond de panier, de type à détection de porteuse et résolution de collision (CSMA-CR), couplé aux premiers moyens (4), et couplée à un bus (B2) reliant une pluralité de cartes d'abonné.

2. Carte d'abonné selon la revendication 1, **caractérisée en ce que** les premiers moyens comportent un circuit (4) de concentration d'une pluralité de canaux de données, selon le protocole HDLC.

3. Unité de raccordement d'abonnés (SU), pour un réseau de télécommunication comportant des commutateurs (LEC) numériques à intégration de services et des commutateurs de données (FRN) ; **caractérisée en ce qu'**elle comporte au moins une carte d'abonné numérique (ISC1, .... ISC16) selon l'une des revendications 1 à 2.

4. Unité de raccordement d'abonnés (SU) selon la revendication 3, **caractérisée en ce qu'**elle comporte en outre des seconds moyens de concentration (FHC) pour concentrer des trames Internet déjà concentrées par des premiers moyens (4) appartenant respectivement à plusieurs cartes d'abonné (ISC1, ..., ISC16).

5. Unité de raccordement d'abonnés (SU) selon la revendication 3, **caractérisée en ce qu'**elle comporte des moyens de concentration (FHC) pour concentrer des trames Internet provenant d'une pluralité de lignes d'abonné analogiques.

## Claims

1. A digital subscriber card (ISC1, .... ISC16) for a telecommunication network including integrated services digital exchanges (LEG) and data switches (FRN), the card including:
. first means (4) for concentrating on n×64 kbit/s data links Internet frames from a plurality of digital subscriber lines (L1, ..., L128) before routing them to a data switch (FRN), and
. second means (2, 5, 6) for receiving an instruction supplied by a call processor (CP) and for controlling the first means (4) so as to concentrate Internet frames and transmit them in a virtual circuit routing them to a data switching center (FRN) when said second means receive an instruction to that effect,
the card being **characterized in that** it further includes carrier detect and collision resolution (CSMA-CR) type backplane interface circuit (3) coupled to the first means (4) and coupled to a bus (B2) connecting a plurality of subscriber cards.

2. A subscriber card according to claim 1, **characterized in that** the first means include a concentrator (4) for concentrating a plurality of data channels conforming to the HDLC protocol.

3. A subscriber unit (SU) for a telecommunication network including integrated services digital exchanges (LEC) and data switches (FRN), **characterized in that** it includes at least one digital subscriber card (ISC1, ..., ISC16) according to any of claims 1 to 2.

4. A subscriber unit (SU) according to claim 3, **characterized in that** it further includes second concentrator means (FHC) for concentrating Internet frames already concentrated by first means (4) belonging respectively to a plurality of subscriber cards (ISC1, ..., ISC16).

5. A subscriber unit (SU) according to claim 3, **characterized in that** it includes concentrator means (FHC) for concentrating Internet frames from a plurality of analog subscriber lines.

## Patentansprüche

1. Digitale Teilnehmerkarte (ISC1, ..., ISC16) für ein Fernmeldenetz mit dienstintegrierenden digitalen Vermittlern (LEC) und Datenvermittlern (FRN), mit:
- ersten Mitteln (4) zum Konzentrieren, auf Datenverbindungen zu n x 64 kb/s, von Internet-Rahmen, die von einer Mehrzahl von digitalen Teilnehmerleitungen (L1, ..., L128) kommen, vor ihrer Weiterleitung zu einem Datenvermittler (FRN);
- und zweiten Mitteln (2, 5, 6) zum Empfangen eines von einer Rufverarbeitungsschaltung (CP) gelieferten Befehls und zum Steuern der ersten Mittel (4), so dass die Internet-Rahmen konzentriert und in einer virtuellen Schaltung übertragen werden, die sie zu einem Datenvermittler (FRN) befördert, wenn diese zweiten Mittel einen solchen Befehl empfangen;
**dadurch gekennzeichnet, dass** sie ferner eine Backplane-Busschnittstellenschaltung (3) vom Typ mit Trägererkennung und Kollisionsauflösung (CSMA-CR) umfasst, die an die ersten Mittel (4) gekoppelt ist und an einen Bus (B2) gekoppelt ist,der eine Mehrzahl von Teilnehmerkarten verbindet.

2. Teilnehmerkarte nach Anspruch 1, **dadurch gekennzeichnet, dass** die ersten Mittel eine Schaltung (4) zum Konzentrieren einer Mehrzahl von Datenkanälen nach dem HDLC-Protokoll umfassen.

3. Teilnehmeranschlusseinheit (SU) für ein Fernmeldenetz, das digitale dienstintegrierende Vermittler (LEC) und Datenvermittler (FRM) umfasst, **dadurch gekennzeichnet, dass** sie wenigstens eine digitale Teilnehmerkarte (ISC1, ..., ISC16 nach einem der Ansprüche 1 bis 2 umfasst.

4. Teilnehmeranschlusseinheit (SU) nach Anspruch 3, **dadurch gekennzeichnet, dass** sie ferner zweite Konzentrationsmittel (FHC) zum Konzentrieren der Internet-Rahmen umfasst, die bereits von den jeweils zu mehreren Teilnehmerkarten (ISC1, ..., ISC16) gehörenden ersten Mitteln (4) konzentriert sind.

5. Teilnehmeranschlusseinheit (SU) nach Anspruch 3, **dadurch gekennzeichnet, dass** sie Konzentrationsmittel (FHC) zum Konzentrieren von Internet-Rahmen umfasst, die von einer Mehrzahl von analogen Teilnehmerleitungen kommen.
